# EUROPÄISCHE PATENTSCHRIFT

(11) **EP 1 065 925 B1**
(45) Veröffentlichungstag und Bekanntmachung des Hinweises auf die Patenterteilung: **31.10.2001**
(21) Anmeldenummer: 99924823.0
(22) Anmeldetag: 26.04.1999
(51) Int. Cl.: A01K 5/01, A01K 5/02, A01K 7/00, A01K 7/02, A01K 9/00

(54) **VERFAHREN ZUM AUSBRINGEN VON NAHRUNGSMITTEL FÜR TIERE UND/ODER REINIGUNGSMITTEL AUS EINEM MISCHBEHÄLTER**
METHOD FOR DISTRIBUTING ANIMAL FEED AND/OR CLEANING PRODUCTS FROM A MIXING CONTAINER
PROCEDE POUR DISTRIBUER A DES ANIMAUX DES ALIMENTS ET/OU DES PRODUITS NETTOYANTS CONTENUS DANS UN RECIPIENT DE MELANGE

(30) Priorität: 24.04.1998 DE 19818528
(43) Veröffentlichungstag der Anmeldung: 10.01.2001
(73) Patentinhaber: Förster, Martin, 78234 Engen (DE)
(72) Erfinder: Förster, Martin, 78234 Engen (DE)
(74) Vertreter: Weiss, Peter, Dr.
(86) Internationale Anmeldenummer: EP9902801
(87) Internationale Veröffentlichungsnummer: WO9955144

(56) Entgegenhaltungen:
- EP-A- 0 404 028
- WO-A-92/12626
- US-A- 3 648 662
- US-A- 5 749 316

## Beschreibung

Die vorliegende Erfindung betrifft ein Verfahren zum Ausbringen von flüssigem Nahrungsmittel für Tiere, und/oder Reinigungsmittel aus einem Mischbehälter über zumindest eine Nahrungsmittelleitung zu einer Entnahmestelle, insbesondere Tränke, wobei Nahrungsmittel und/oder Reinigungsmittel aus dem Mischbehälter zur Entnahmestelle befördert wird sowie eine Einrichtung zum Durchführen des Verfahrens.

Mit derartigen Verfahren wird in herkömmlicher Weise Nahrungsmittel aus einem Mischbehälter eines Tränkeautomaten über eine Nahrungsmittelleitung einer Entnahmestelle zugeführt. Insbesondere in der Tierfütterung und Tieraufzucht werden derartige Verfahren häufig eingesetzt. Sie dienen in erster Linie dazu um Tiere, wie bspw. Kälber, Ferkel zu füttern.

Problematisch dabei ist, dass die Nahrungsmittelleitungen, und sämtliche in die Nahrungsmittelleitung eingesetzten Bauteile wie Ventile oder Pumpen, Verteiler oder sogar die Düsen zum Ausbringen von flüssigem Nahrungsmittel durch den hohen Milch und Eiweissanteil verschmutzen. Derartige Leitungen müssen sehr häufig auch schon aus Hygienegründen gereinigt werden.

Die Reinigung ist häufig problematisch, da sich Nahrungsmittelreste vorzugsweise in den Bauteilen, aber auch in der Nahrungsmittelleitung ansammeln, und dort verderben. Keime entstehen, die für die Fütterung von Tieren unerwünscht sind.

Bei der Verwendung von Kreiselpumpen fällt der Druck ab, wenn bspw. diese leer läuft. Dann kann das verbleibende Nahrungsmittel in der Leitung nur unvollständig ausgebracht werden.

Aus dem Stand der Technik gemäss der EP 0 404 028 ist ein Behälter zur Aufnahme von Nahrungsmittel bekannt, welcher einem Anhänger aufsitzt. Zum Ausbringen des Nahrungsmittels, bevorzugt als Trockennahrungsmittel, ist dem Behälter eine Gebläse zugeordnet. Über dieses Gebläse lässt sich der Behälter entleeren.

Die US 3,648,662 beschreibt einen Mischbehälter zum Mischen von trockenem Nahrungsmittel mit flüssigem Nahrungsmittel, bei welchem das trockene Nahrungsmittel über einen Ventilator aufgeblasen wird und kontinuierlich einer Flüssigkeit unter ständigem Rühren zugeführt wird. Dieses flüssige und fertig gemischte Nachrungsmittel wird dann direkt an eine Entnahmestelle geleitet.

Der vorliegenden Erfindung liegt die Aufgabe zugrunde ein Verfahren sowie eine Einrichtung zum Durchführen des Verfahrens der eingangs beschriebenen Art zu schaffen, mit welchen beim Ausbringen von Nahrungsmittel und/oder Reinigungsmittel weder Reste an Reinigungsmittel noch an Nahrungsmittel in den Bauteilen verbleiben. Eine gute Reinigung der Leitungen sowie verbesserte Transporteigenschaften von Nahrungsmittel sollen gewährleistet werden, ohne dass ggfs. das Tier von der Tränke bzw. von der Entnahmestelle ferngehalten werden muss.

Ferner soll die Einrichtung mit einfachsten Mitteln betrieben werden können. Insbesondere sollen Herstellungs- und Betriebskosten erheblich reduziert werden.

Zur Lösung dieser Aufgabe führt, dass zum vollständigen Ausbringen von Nahrungsmittel und/oder Reinigungsmittel aus der Nahrungsmittelleitung und/oder Entnahmestelle der Nahrungsmittelleitung Luft taktweise zugeführt wird.

Die vorliegende Erfindung ermöglicht, dass durch das vorzugsweise getaktete Einbringen von Luft in eine Nahrungsmittelleitung, ein verbleibender Rest an Nahrungsmittel in der Leitung, wenn der Mischbehälter durch den Fütterungsvorgang entleert wird, an die Entnahmestelle ausgebracht wird. Dort kann das Tier den verbleibenden Rest an Nahrungsmittel aufnehmen.

Von Vorteil bei der vorliegenden Erfindung ist das getaktete Zuführen von Luft in die Nahrungsmittelleitung. Dies geschieht in einzelnen Impulsen. Luft kann bspw. eine bestimmte einstellbare Dauer z.B. vier Sekunden lang der Nahrungsmittelleitung zugeführt werden. Anschliessend erfolgt eine Pause von einigen Sekunden, vorzugsweise zwei Sekunden.

In dieser Zeit können sich, die in der Nahrungsmittelleitung verbleibenden, kleinsten Nahrungsmitteltröpfchen ansammeln und zu grossen Tropfen zusammenwachsen. Anschliessend erfolgt ein weiterer Impuls von Luft. Die angesammelten Nahrungsmitteltropfen können auf diese Weise in Richtung zur Entnahmestelle weitertransportiert werden und dort ausgebracht werden.

Hierdurch lässt sich beinahe rückstandsfrei die Nahrungsmittelleitung entleeren.

Anschliessend erfolgt eine Pause, damit die Tiere genügend Zeit haben, das in der Nahrungsmittelleitung verbleibende und nun an die Entnahmestelle ausgebrachte Nahrungsmittel aufzunehmen.

Dann wird, wenn dies gewünscht wird, eine geringe Menge an Reinigungsmittel, vorzugsweise pures Wasser über den Mischbehälter der Nahrungsmittelleitung zugeführt. Dieses Wasser ist vorzugsweise vorgewärmt, so dass einerseits eine bessere reinigende Wirkung erzielt wird und andererseits zusätzlich von den Tieren an der Entnahmestelle aufgenommen werden kann. Es wird bevorzugt eine geringe Menge an Wasser gewählt, die dann in oben beschriebender Weise mittels Luftzuführung durch die Nahrungsmittelleitung vorzugsweise, getaktet an der Entnahmestelle ausgebracht wird. Hierdurch wird der Mischbehälter und sämtliche daran anschliessende Bauteile wie Pumpen, Ventile, Nahrungsmittelleitung und Düsen oder Nuckel gereinigt. Die verbleibenden Nahrungsmitteltröpfchen werden mit dem warmen Wasser gebunden und an der Entnahmestelle ausgebracht.

Es werden Mischbehälter, Pumpe,. Ventilelemente und Nahrungsmittelleitung sowie Entnahmestelle mit blossem Wasser gereinigt, ohne dass die Tiere von der Entnahmestelle ferngehalten werden müssen.

Um jedoch die Bauteile wie Mischbehälter, Nahrungsmittelleitung, Pumpe und Ventilelemente mit einem zusätzlichen Reinigungsmittel zu reinigen, kann endseits der Nahrungsmittelleitung ein Ventil vorgesehen sein, welches eine Weiterführung von Nahrungsmittel zur Entnahmestelle verhindert und eine Ablassleitung automatisch freischaltet. Auf diese Weise wird Wasser mit zugesetztem Reinigungsmittel bevorzugt unmittelbar vor der Entnahmestelle abgelassen. Dies kann auch an einzelnen Verzweigungen der Nahrungsmittelleitung geschehen. Dabei werden fast vollständig die Nahrungsmittelleitung sowie Pumpe, Mischbehälter und Ventilelemente gereinigt. Das Ausbringen von Reinigungsmittel kann auch mit Luft in oben beschriebener Weise geschehen. Ein anschliessendes Nachreinigen mit wasser erfolgt.

Soll die Entnahmestelle ebenfalls mit Reinigungsmittel gereinigt werden, müssen die Tiere von ihr ferngehalten werden. Zu diesem Zweck kann es von Vorteil sein, wenn die Entnahmestelle mittels eines Abdeckelementes automatisch verdeckt und ggfs. eine Ablassleitung im Trog freigeschaltet wird.

Anschliessend wird klares Wasser zum Nachspülen dem Mischbehälter und der Nahrungsmittelleitung zugeführt, welches auch über getaktetes Zuführen von Luft ausgebracht wird.

Die Nahrungsmittelleitung lässt sich auf diese Weise nahezu vollständig entleeren.

Wichtig bei der vorliegenden Erfindung ist jedoch auch, dass die einzelnen Vorgänge, das getaktete Zuführen von Luft, das Schalten der Ventile sowie die Bestimmung von Nahrungsmittelmenge und Reinigungsflüssigkeitsmenge frei wählbar und bestimmbar sind. Diese lassen sich an einer Steuereinrichtung des Mischbehälters exakt einstellen. Hierdurch kann auf unterschiedliche Längen von Nahrungsmittelleitungen zum Ausbringen von Reinigungsmittel und Nahrungsmittel Einfluss genommen werden. Je länger eine Nahrungsmittelleitung ist, je grösser sind die Zyklen zu wählen, in welchen die Luft getaktet der Nahrungsmittelleitung zugeführt wird.

Entsprechend länger können dann auch die Pausen gewählt sein, in welchen die Tiere an der Entnahmestelle das restliche ausgebrachte Nahrungsmittel aufnehmen können. Gleiches gilt auch für den oben beschriebenen Reinigungsprozess. Auf diese Weise lassen sich individuell Reinigungsprogramme an die Menge von Nahrungsmittelleitung sowie an Entnahmestellen anpassen, um eine bestmögliche Reinigung und Hygiene zu erzielen.

Ferner hat sich als besonders vorteilhaft erwiesen, das Abdeckelement, welches zum Verschliessen der Entnahmestelle vorgesehen ist, selbst als Entnahmestelle oder Futtertrog auszubilden. Dabei kann den Tieren Nahrungsmittel zugeführt werden, während die eigentliche Entnahmestelle überdeckt ist. In dieser Zeit kann die darunterliegende Entnahmestelle gereinigt werden, ohne dass die Tiere versuchen diese Entnahmestelle selbst zu öffnen oder diese beim Schliessen beschädigen. Die Tiere sind abgelenkt und greifen auf das neu eingebrachte Nahrungsmittel auf dem Abdeckelement zu. Ein Verschliessen der Entnahmestelle kann daher unproblematisch erfolgen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine .schematisch dargestellte Draufsicht auf eine erfindungsgemässe Einrichtung zum Versorgen von Tieren mit Nahrungsmittel;
Figur 2 eine erfindungsgemässe Einrichtung zum Versorgen von Tieren mit Nahrungsmittel als weiteres Ausführungsbeispiel;
Figur 3 ein weiteres Ausführungsbeispiel der Einrichtung zum Versorgen von Nahrungsmittel gemäss den Figuren 1 und 2;
Figur 4 eine Draufsicht auf eine mögliche Entnahmestelle als Tränke;
Figur 5 eine schematisch dargestellte Seitenansicht der Entnahmestelle gemäss Figur 4.

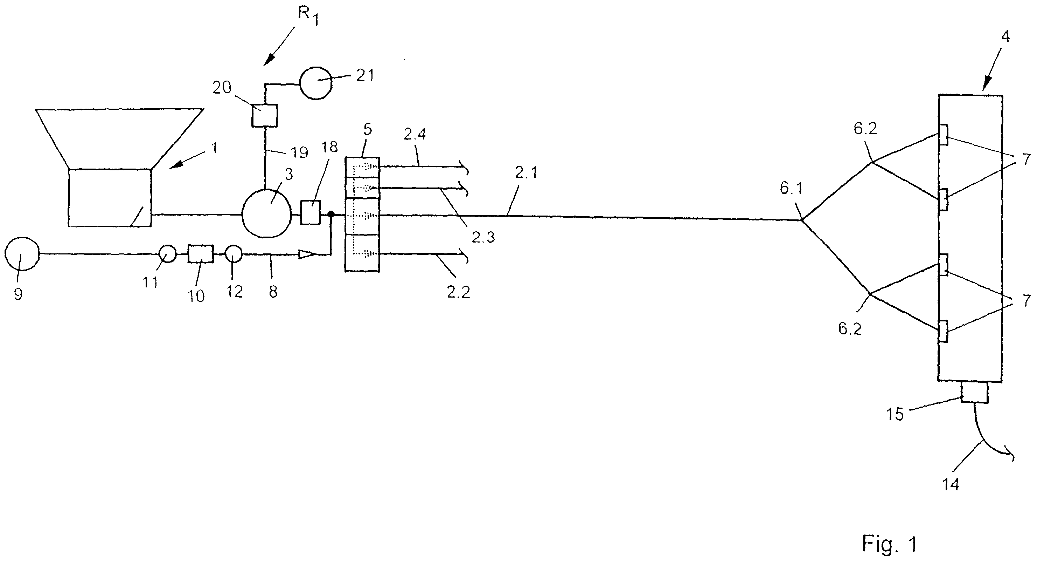

Gemäss Figur 1 weist eine erfindungsgemässe Einrichtung R, zum Ausbringen von Nahrungsmittel für Tiere, und/oder Reinigungsmittel einen Mischbehälter 1 auf, an welchen sich im bevorzugten Ausführungsbeispiel eine Nahrungsmittelleitung 2.1 anschliesst.

In die Nahrungsmittelleitung 2.1 ist eine Pumpe 3 zum Transportieren von Nahrungsmittel aus dem Mischbehälter 1 über die Nahrungsmittelleitung 2.1 zu einer Entnahmestelle 4, eingesetzt.

Der Pumpe 3 ist ein Ventilelement 5 nachgeschaltet, in welches aus einer Mehrzahl von einzelnen, hier nicht näher bezifferten Ventilen, bestehen kann. An dieses Ventilelement 5 können beliebig viele schaltbare weitere Nahrungsmittelleitungen 2.2 bis 2.4 angeschlossen sein, die zu entsprechenden Entnahmestellen führen. Das Ventilelement 5 sowie auch die Pumpe 3 sind vorzugsweise Bestandteil des Mischbehälters 1. Zur Erläuterung der Funktionsweise sind Pumpe 3 und Ventilelement 5 ausserhalb des Behälters 1 dargestellt. Sie können selbstverständlich auch ausserhalb liegen, wenn dies gewünscht wird.

Die Nahrungsmittelleitung 2.1 mündet in eine erste Verzweigung 6.1, diese wiederum in jeweils zwei weitere Verzweigungen 6.2. Diese können sich nochmals in jeweils zwei oder mehrere Nahrungsmittelleitungen aufteilen. Hierdurch wird an der Entnahmestelle 4 eine gleichmässige Verteilung bzw. Aufteilung von Nahrungsmittel erreicht. Das Nahrungsmittel wird über hier nur angedeutete Düsen 7 in einen Trog bzw. in die Entnahmestelle 4 ausgebracht. Die Tiere können von dieser Entnahmestelle 4 das Nahrungsmittel aufnehmen. Der Trog bzw. die Entnahmestelle 4 kann zur Reinigung mit Flüssigkeit mit einem Ventilelement 15 und daran anschliessender Ablassleitung 14 versehen sein.

Wichtig bei der vorliegenden Erfindung ist ferner, dass vor dem Ventilelement 5 eine Luftleitung 8 in die Nahrungsmittelleitung 2.1 einmündet, welche über eine Luftquelle 9 gespeist wird. Ein Rückschlagventil 18 ist der Pumpe 3 unmittelbar nochgeschaltet. Es bewirkt dass Luft nur in Richtung der Auslassöffnungen bzw. Futtertroge geleitet wird. In der Luftleitung 8 können ein ansteuerbares Ventil 10, Durckminderer 11 und Drucksensor 12 vorgesehen sein. Das Ventil 10 ist über eine hier nicht dargestellte Steuereinrichtung des Mischbehälters 1 automatisch betätigbar. Ebenso sind Pumpe 3 und Ventilelement 5 sowie die Luftquelle 9, vorzugsweise als Kompressor ausgebildet, direkt ansteuerbar.

Ferner ist bei der vorliegenden Erfindung von Vorteil, wenn an die Pumpe 3 eine Wasserleitung 19 mit eingesetztem Ventil 20 angeschlossen ist, die Wasser über eine Wasserquelle 21, wenn es erforderlich ist in die Pumpe 3 einspeist. Dabei wird zur Unterstützung des Ansaugprozesses eine geringe Menge Wasser, gesteuert über das Venil 20 der Pumpe 3 zugegeben, so dass diese das Nahrungsmittel aus dem Behälter 1 sofort ansaugen kann. Leerlaufzeiten und erhöhte Abnutzungen der Pumpe 3 können auf diese Weise reduziert werden.

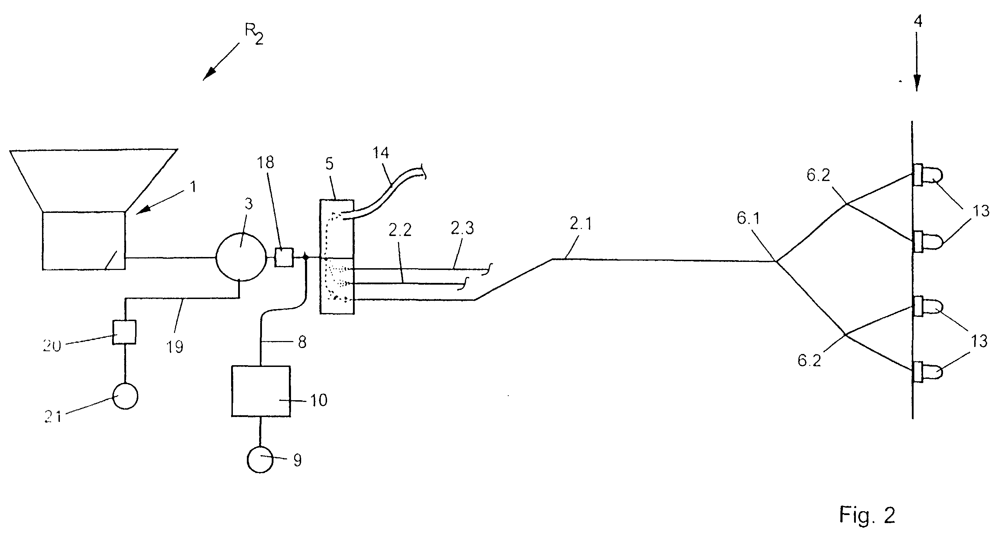

Eine entsprechend ähnliche Einrichtung R₂ mit ähnlichen Bauteilen zeigt Figur 2, wobei anstelle der als Trog ausgebildeten Entnahmestelle 4 eine Entnahmestelle 4 aus einer Mehrzahl von Nuckeln 13 gebildet ist. Ferner ist dem Ventilelement 5 eine Ablassleitung 14 zugeordnet.

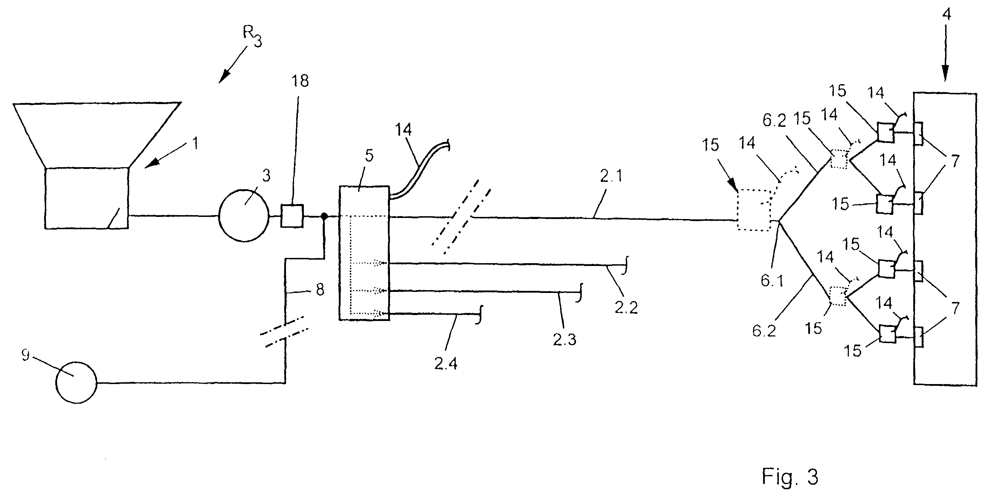

In einem weiteren Ausführungsbeispiel gemäss Figur 3 ist eine Einrichtung R₃ aufgezeigt, welche die o.g. Bauteile umfasst. Entscheidend ist hier, dass entweder an der Verzweigungsstelle 6.1 und/oder 6.2 und/oder nach den Verzweigungsstellen 6.2 unmittelbar vor den Düsen 7 ausserhalb der Entnahmestelle 4 eine Mehrzahl von Schaltventilen 15 in die Nahrungsmittelleitungen 2.1 eingesetzt sind. Die Besonderheit dieser automatischen und ansteuerbaren Schaltventile 15 ist, dass sie alle mit einer Ablassleitung 14 versehen sind. Über diese kann Reinigungsflüssigkeit ausserhalb der Entnahmestellen abgeführt werden.

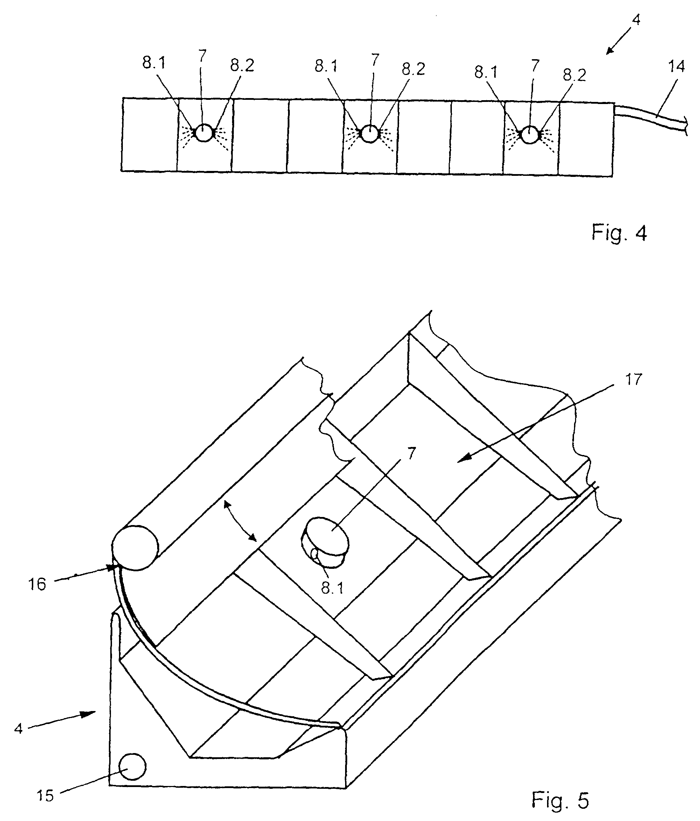

In Figur 4 ist eine als Trag ausgebildete Entnahmestelle 4 aufgezeigt. Dabei sind vorzugsweise eine Mehrzahl von Düsen 7 vorgesehen, welche zwei waagrecht ausgerichtete Auslassdüsen 8.1, 8.2 aufweisen. Hierdurch wird das Nahrungsmittel gleichmässig seitlich ausgespritzt, so dass keine Spritzer nach aussen treten und eine gleichmässige Verteilung von Nahrungsmittel in der Entnahmestelle erfolgt. Dabei kann der Entnahmestelle 4 über ein ansteuerbares Schaltventil 15 eine Ablassleitung 14 zum Ablassen von Reingigungsmittel zugeordnet sein.

Damit beim Reinigen die Tiere nicht an der Entnahmestelle 4 verbleiben, wenn insbesondere mit Reinigungsmittel gespült werden soll, kann ein Abdeckelement 16, siehe Figur 5, vor eine Öffnung 18 der Entnahmestelle 4 verfahren werden.

Die Funktionsweise der vorliegenden Erfindung ist folgende:

Das Nahrungsmittel wird in einem herkömmlichen Mischbehälter 1 eines Tränkeautomaten warm oder kalt angerührt, aufgewärmt und über die Nahrungsmittelleitung 2.1 ggfs. mit Hilfe der Pumpe 3 an eine entfernt liegende Entnahmestelle 4 ausgebracht.

Die Entnahmestelle 4 ist Tieren zur Aufnahme von Nahrungsmittel zugänglich.

Ein Ventilelement 5, vorzugsweise als Mehrventilblock ausgebildet, ist der Pumpe 3 nachgeschaltet in die Nahrungsmittelleitung 2.1 eingesetzt.

Erfindungsgemäss wird nach dem Ausbringen von Nahrungsmittel aus dem Mischbehälter 1 an die Entnahmestelle 4, der Nahrungsmittelleitung 2.1 über das Ventilelement 5 Luft zugeführt. Dabei wird die Luft über die Luftleitung 8 von einer entfernt liegenden Luftquelle 9 in Richtung Entnahmestelle 4 eingebracht. Ein der Pumpe 3 nachgeschaltetes Rückschlagventil 18 bewirkt, dass die Luft in Richtung der Entnahmestelle 4 geleitet wird. Das in der Nahrungsmittelleitung 2.1 verbleibende Nahrungsmittel wird zur Entnahmestelle 4 befördert.

Damit möglichst viel des verbleibenden Nahrungsmittels aus der Nahrungsmitteleitung 2.1 zur Entnahmestelle 4 durch das Zuführen von Luft aus der Nahrungsmittelleitung ausgebracht werden kann, wird die Luft über die Luftleitung 8 getaktet in die Nahrungsmitteleitung 2.1 ggfs. über das Ventilelement 5 eingespeist. Hierdurch entsteht eine Transporthilfe für in der Nahrungsmittelleitung 2.1 verbleibendes Nahrungsmittel mittels Luftzufuhr, wenn bspw. die Pumpe 3 leerläuft. Bspw. kann über entsprechende Zyklen von vorzugsweise 30 Sekunden, jeweils vier Sekunden Luft, danach zwei Sekunden Pause und wieder vier Sekunden, Luft in die Nahrungsmittelleitung 2.1 eingebracht werden.

Von Vorteil ist hier, dass sich Nahrungsmittelreste oder in der Nahrungsmittelleitung 2.1 verbleibende Tränkeresttropfen während einer Pause ansammeln können.

Nach dem Ausbringen von Nahrungsmittel aus der Nahrungsmittelleitung 2.1 wird vorzugsweise dem Mischbehälter 1 Reinigungsflüssigkeit, insbesondere Wasser zugegeben. Vorzugsweise wird eine sehr geringe Wassermenge gewählt, welche im Mischbehälter 1 vorgewärmt wird. Anschliessend wird mit Hilfe der Pumpe 3 diese geringe Menge an klarem Wasser der Entnahmestelle 4 zugeführt, wobei das Zuführen von Wasser durch Zuführen von Luft in die Nahrungsmittelleitung 2.1 in oben beschriebener Weise ggfs. getacktet das Reinigen und Ausbringen des Wassers zur Entnahmestelle 4 wesentlich erleichtert.

Diese Funktion kann von dem Mischbehälter 1 bzw. Tränkeautomat abgeschaltet werden, wenn bspw. in den ersten Lebenstagen Ferkel gefüttert werden müssen. Diese dürfen in den ersten Tagen kein Wasser zu sich nehmen.

Ferner ist von Vorteil, dass durch Zuführen von Luft das Wasser sehr schnell und effektiv die Nahrungsmittelleitung 2.1 reinigt und verbleibende Nahrungsmittelreste auflöst und der Entnahmestelle 4 zuführt.

Ferner ist von der vorliegenden Erfindung umfasst, dass dem Mischbehälter 1 eine Reinigungsflüssigkeit zugegeben wird, welche über die Pumpe 3 und das Ventilelement 5 durch die Nahrungsmittelleitung 2.1 zur Entnahmestelle 4 transportiert wird. Das Transportieren kann ebenfalls wie oben beschrieben durch das Zuführen von getakteter Luft in Intervalen geschehen. Hierdurch wird die vollständige Nahrungsmittelleitung 2.1 sehr effektiv gereinigt.

Es kann auch der kleine Abschnitt zwischen Mischbehälter 1, Pumpe 3 und Ventilelement 5, wie es in Figur 2 dargestellt ist, direkt oder separat gereinigt werden. Hierzu wird Reinigungsflüssigkeit dem Mischbehälter 1 zugeführt, und über die Pumpe 3 in das Ventilelement 5 ausgebracht, wobei von dort die Reinigungsflüssigkeit über eine Ablassleitung 14 abgeführt wird.

Die Zufuhr von Luft kann durch steuerbare Magnetventile, Drucksensoren sowie Druckminderer angesteuert, geregelt und bestimmt werden.

Von Vorteil bei der vorliegenden Erfindung ist auch, dass über separate Schaltventile 15, welche an Verzweigungen 6.1, 6.2 angeordnet sein können, nur ein Teil der Nahrungsmittelleitung Z zwischen bspw. Mischbehälter 1 und Verzweigung 6.1 gereinigt werden kann. Dann ist den Schaltventilen 15 jeweils eine Ablassleitung 14 zugeordnet. Wird nun bspw. die Nahrungsmittelleitung 2.1 mit Reinigungsmittel gereiniqt, so kann durch Schliessen des Schaltventiles 15 die Ablassleitung 14 geöffnet werden, um das Reinigungsmittel vor der Entnahmestelle 4 abzuführen. Auf diese Weise kann direkt das Reinigungsmittel, welches für Tiere schädlich ist, vor Erreichen der Entnahmestelle 4 abgeführt werden.

Die Ansteuerung der Schaltventile 15 kann zentral vom Mischbehälter 1 oder auch dezentral erfolgen. Sanit kann auf diese Weise sehr nahe bis an die Entnahmestelle 4 das Schaltventil 15 geschaltet werden und die vollständige Nahrungsmittelleitung 2.1 bis unmittelbar zur Entnahmestelle 4 mit unverträglichen Reinigungsmitteln gereinigt werden.

Sollte auch das Reinigen der Entnahmestelle 4 selbst erforderlich sein, so wird ein Abdeckelement 16 eine entsprechende Öffnung 17 der Entnahmestelle 4 verschliessen. Das Verschliessen kann ebenfalls automatisch steuerbar von dem Mischbehälter 1 aus erfolgen. Das Verschliessen der Öffnung 17 ist dann erforderlich, wenn hier schädliche Reinigungsmittel verwendet werden, um die Düsen 7 oder Nuckel 13 zu reinigen. Dann ist die vorzugsweise als Trog ausgebildete Entnahmestelle 4 mit einer automatisch zu öffnenden Ablassleitung 14 verbunden. Auf diese Weise kann die Entnahmestelle 4 direkt automatisch angesteuert, verschlossen und eine Ablassleitung 14 geöffnet werden. Ein Reinigen der Entnahmestelle 4 und anschliessendes Spülen mit reinem Wasser ist dadurch erheblich erleichtert.

Es hat sich ferner als besonders vorteilhaft erwiesen, das Abdeckelement 16 selbst als Entnahmestelle auszubilden, damit die Tiere, von der eigentlichen Entnahmescelle 4 abgelenkt sind. Dort kann dann weiteres Futtermittel eingegeben werden. Somit wird auch ein Versuch der Tiere unterbunden, das Abdeckelement von der Entnahmestelle zu entfernen und ggf. zu zerstören.

Die Tiere können durch das zusätzlich als Entnahmestelle ausgebildete Abdeckelement von der eigentlichen Nahrungsmittelaufnahme abgelenkt werden. Während des Überdeckens des Abdeckelementes 16 lässt sich dann die darunterliegende Entnahmestelle 4 ungehindert reinigen.

Diese vorteilhafte Ausgestaltung des Abdeckelementes 16 als eigenständige Entnahmestelle birgt deshalb erhebliche Vorteile, weshalb separat Schutz hierfür begehrt wird.

| Positionszahlenliste | | | | | |
|---|---|---|---|---|---|
| 1 | Mischbehälter | 34 | | 67 | |
| 2 | Nahrungsmittelleitung | 35 | | 68 | |
| 3 | Pumpe | 36 | | 69 | |
| 4 | Entnahmestelle | 37 | | 70 | |
| 5 | Ventilelement | 38 | | 71 | |
| 6 | Verzweigung | 39 | | 72 | |
| 7 | Düsen | 40 | | 73 | |
| 8 | Luftleitung | 41 | | 74 | |
| 9 | Luftquelle | 42 | | 75 | |
| 10 | Ventil | 43 | | 76 | |
| 11 | Druckminderer | 44 | | 77 | |
| 12 | Drucksensor | 45 | | 78 | |
| 13 | Nuckel | 46 | | 79 | |
| 14 | Ablassleitung | 47 | | R₁ | Einrichtung |
| 15 | Schaltventil | 48 | | R₂ | Einrichtung |
| 16 | Abdeckelement | 49 | | R₃ | Einrichtung |
| 17 | Öffnung | 50 | | | |
| 18 | Rückschlagventil | 51 | | | |
| 19 | Wasserleitung | 52 | | | |
| 20 | Ventil | 53 | | | |
| 21 | Wasserquelle | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Ausbringen von flüssigem Nahrungsmittel für Tiere, und/oder Reinigungsmittel aus einem Mischbehälter (1) über zumindest eine Nahrungsmittelleitung (2.1 bis 2.4) zu einer Entnahmestelle (4), insbesondere Tränke, wobei Nahrungsmittel und/oder Reinigungsmittel aus dem Mischbehälter (1) zur Entnahmestelle (4) befördert wird,
**dadurch gekennzeichnet,**
**dass** zum vollständigen Ausbringen von Nahrungsmittel und/oder Reinigungsmittel aus der Nahrungsmittelleitung (2.1 bis 2.4) und/oder Entnahmestelle (4) der Nahrungsmittelleitung (2.1 bis 2.4) Luft taktweise zugeführt wird.

2. Verfahren nach Anspruch 1, **dadurch gekennzeichnet, dass** die Luft eine bestimmte Dauer mit jeweils dazwischenliegenden bestimmbaren Pausen der Nahrungsmittelleitung (2.1 bis 2.4), ggfs. als wiederholbarer Zyklus zugeführt wird.

3. Verfahren nach Anspruch 1 oder 2, **dadurch gekennzeichnet, dass** nach dem Zuführen von Luft und nach dem Ausbringen von Nahrungsmittel und/oder Reinigungsmittel aus der Nahrungsmittelleitung (2.1 bis 2.4) nach einer Pause von wählbarer Dauer, eine bestimmbare geringe Menge an Flüssigkeit insbesondere Wasser der Nahrungsmittelleitung (2.1 bis 2.4) ggfs. über den Mischbehälter (1) zugeführt wird.

4. Verfahren nach Anspruch 3, **dadurch gekennzeichnet, dass** die geringe Menge an Flüssigkeit, insbesondere Wasser, zum Reinigen von Mischbehälter (1), Nahrungsmittelleitung (2.1 bis 2.4) und ggfs. Entnahmestelle (4) durch Zuführen von Luft in die Nahrungsmittelleitung (2.1 bis 2.4) zur Entnahmestelle (4) transportiert wird.

5. Verfahren nach Anspruch 4, **dadurch gekennzeichnet, dass** durch getaktetes Zuführen von Luft in die Nahrungsmittelleitung (2.1 bis 2.4) die geringe Menge an Flüssigkeit an der Entnahmestelle (4) ausgegeben wird.

6. Verfahren nach wenigstens einem der Ansprüche 3 bis 5, **dadurch gekennzeichnet, dass** die Flüssigkeit von geringer Menge, in etwa ab 30 bis 1000 ml für jeweils eine Nahrungsmittelleitung (2.1 bis 2.4), vor dem Zuführen in den Mischbehälter (1) oder die Nahrungsmittelleitung (2.1 bis 2.4) erwärmt wird.

7. Verfahren nach wenigstens einem der Ansprüche 1 bis 6, **dadurch gekennzeichnet, dass** beim Reinigen von Mischbehälter (1) und/oder Nahrungsmittelleitung (2.1 bis 2.4) mittels Reinigungsmittel die Entnahmestelle (4) abgeschaltet und die Reinigungsflüssigekeit über eine, dem Mischbehälter (1) nachgeschaltete Abflussleitung (14) oder eine der Entnahmestelle (4) vorgeschaltete Abflussleitung (14), abgeführt wird.

8. Verfahren nach wenigstens einem der Ansprüche 1 bis 7, **dadurch gekennzeichnet, dass** zum Reinigen der Entnahmestelle (4) und dessen Düsen (7) oder Nuckel (13) mittels Reinigungsflüssigkeit, vor dem Zuführen von Reinigungsflüssigkeit über die Nahrungsmittelleitung (2.1 bis 2.4) die Entnahmestelle (4) automatisch verschlossen oder abgedeckt wird.

9. Verfahren nach Anspruch 8, **dadurch gekennzeichnet, dass** anschliessend der Entnahmestelle (4) Reinigungsflüssigkeit zugeführt und diese über einen automatischen betätigbare Ablassleitung (14) abgeführt wird, wobei dann ein Nachreinigen mittels Wasser folgt.

10. Einrichtung zum Ausbringen von flüssigem Nahrungsmittel für Tiere und/oder Reinigungsmittel aus einem Mischbehälter (1) an welchen eine Nahrungsmittelleitung (2.1 bis 2.4) anschliesst, die mit einer Entnahmestelle (4) für Tiere verbunden ist, **dadurch gekennzeichnet, dass** über zumindest eine in die Nahrungsmittelleitung (2.1 bis 2.4) einmündende Luftleitung (8) ggfs. gesteuert über ein Ventilelement (5) Luft taktweise der Nahrungsmittelleitung (2.1 bis 2.4) zuführbar ist.

11. Einrichtung nach Anspruch 10, **dadurch gekennzeichnet, dass** zwischen Mischbehälter (1) und Ventilelement (5) eine Pumpe (3) in die Nahrungsmittelleitung (2) eingesetzt ist, an welche ein Rückschlagventil (18) anschliesst.

12. Einrichtung nach Anspruch 11, **dadurch gekennzeichnet, dass** zwischen Ventilelement (5) und Rückschlagventil (18) eine Luftleitung (8) in die Nahrungsmittelleitung (2.1) einmündet.

13. Einrichtung nach wenigstens einem der Ansprüche 10 bis 12, **dadurch gekennzeichnet, dass** dem Mischbehälter (1) und/oder dem Ventilelement (5) und/oder der Entnahmestelle (4) eine automatisch betätigbare Ablassleitung (14) zugeordnet ist.

14. Einrichtung nach wenigstens einem der Ansprüche 10 bis 13, **dadurch gekennzeichnet, dass** die Entnahmestelle (4) beim automatischen Reinigen mit Reingungsmittel automatisch abdeckbar oder verschliessbar ist.

15. Einrichtung nach wenigstens einem der Ansprüche 10 bis 14, **dadurch gekennzeichnet, dass** die Entnahmestelle (4) beim automatischen Reinigen mit Reinigungsmittel automatisch mittels einem Abdeckelement (16) überdeckbar ist, welches ggf. selbst als Entnahmestelle zur Aufnahme von Nahrungsmittel für Tiere ausgebildet ist.

16. Einrichtung nach wenigstens einem der Ansprüche 11 bis 15, **dadurch gekennzeichnet, dass** jeder Verzweigung (6.1, 6.2) ein ansteuerbares Schaltventil (15) zugeordnet ist.

17. Einrichtung zum Ausbringen von flüssigem Nahrungsmittel für Tiere und/oder Reinigungsmittel mit einer Entnahmestelle (4) für Tiere, **dadurch gekennzeichnet, dass** eine Öffnung (17) der Entnahmestelle (4) mittels zumindest einem Abdeckelement (16) manuell und/oder automatisch abdeckbar oder verschliessbar ist, wobei das zumindest eine Abdeckelement (16) zumindest teilweise als Entnahmestelle (4) für zusätzliches Futter für Tiere ausgebildet ist.

## Claims

1. Method of extracting liquid feed for animals, and/or cleansing agent, from a mixing vessel (1) via at least one feed line (2.1 to 2.4) to an extraction point (4), more especially drinks, feed and/or cleansing agent being delivered from the mixing vessel (1) to the extraction point (4), **characterised in that**, for the complete extraction of the feed and/or cleansing agent from the feed line (2.1 to 2.4) and/or extraction point (4), air is supplied in a pulsed manner to the feed line (2.1 to 2.4).

2. Method according to claim 1, **characterised in that** the air is supplied to the feed line (2.1 to 2.4) for a specific period, with predeterminable pauses between each period, possibly as a repeatable cycle.

3. Method according to claim 1 or 2, **characterised in that**, after supplying air and after extracting feed and/or cleansing agent from the feed line (2.1 to 2.4) after a pause of selectable duration, a predeterminable small quantity of liquid, more especially water, is supplied to the feed line (2.1 to 2.4), possibly via the mixing vessel (1).

4. Method according to claim 3, **characterised in that** the small quantity of liquid, more especially water, for cleaning the mixing vessel (1), feed line (2.1 to 2.4) and, possibly, extraction point (4), is conveyed to the extraction point (4) by supplying air into the feed line (2.1 to 2.4).

5. Method according to claim 4, **characterised in that** the small quantity of liquid is expelled at the extraction point (4) by the pulsed supply of air into the feed line (2.1 to 2.4).

6. Method according to at least one of claims 3 to 5, **characterised in that** the small quantity of liquid, between about 30 and 1000 ml for each feed line (2.1 to 2.4), is heated prior to being supplied to the mixing vessel (1) or the feed line (2.1 to 2.4).

7. Method according to at least one of claims 1 to 6, **characterised in that**, during cleaning of the mixing vessel (1) and/or the feed line (2.1 to 2.4) by means of cleansing agent, the extraction point (4) is switched-off and the cleansing liquid is removed via a discharge line (14) downstream of the mixing vessel (1) or a discharge line (14) upstream of the extraction point (4).

8. Method according to at least one of claims 1 to 7, **characterised in that**, for cleaning the extraction point (4) and the nozzles (7) or teats (13) thereof by means of cleansing liquid, the extraction point (4) is automatically closed or covered before cleansing liquid is supplied via the feed line (2.1 to 2.4).

9. Method according to claim 8, **characterised in that** cleansing liquid is subsequently supplied to the extraction point (4) and said cleansing liquid is removed via an automatically actuatable outlet line (14), a further cleansing by means of water then taking place.

10. Apparatus for extracting liquid feed for animals and/or cleansing agent from a mixing vessel (1) with which a feed line (2.1 to 2.4) communicates, said feed line being connected to an extraction point (4) for animals, **characterised in that** air can be supplied in a pulsed manner to the feed line (2.1 to 2.4) via at least one air line (8), which terminates in the feed line (2.1 to 2.4) and is possibly controlled via a valve element (5).

11. Apparatus according to claim 10, **characterised in that** a pump (3), with which a non-return valve (18) communicates, is inserted in the feed line (2) between mixing vessel (1) and valve element (5).

12. Apparatus according to claim 11, **characterised in that** an air line (8) terminates in the feed line (2.1 to 2.4) between valve element (5) and non-return valve (18).

13. Apparatus according to at least one of claims 10 to 12, **characterised in that** an automatically actuatable outlet line (14) is associated with the mixing vessel (1) and/or with the valve element (5) and/or with the extraction point (4).

14. Apparatus according to at least one of claims 10 to 13, **characterised in that** the extraction point (4) can be automatically covered or closed during the automatic cleaning with cleansing agent.

15. Apparatus according to at least one of claims 10 to 14, **characterised in that** the extraction point (4) can be automatically covered by means of a cover element (16) during the automatic cleaning with cleansing agent, said cover element itself possibly being configured as an extraction point for accommodating feed for animals.

16. Apparatus according to at least one of claims 11 to 15, **characterised in that** a controllable pilot valve (15) is associated with each branch (6.1, 6.2).

17. Apparatus for extracting liquid feed for animals and/or cleansing agent having an extraction point for animals, **characterised in that** one opening (17) of the extraction point (4) can be manually and/or automatically covered or closed by means of at least one cover element (16), the at least one cover element (16) being configured, at least partially, as the extraction point (4) for additional fodder for animals.

## Revendications

1. Procédé pour délivrer à des animaux un produit alimentaire liquide et/ou un agent de nettoyage, à partir d'un récipient mélangeur (1), à travers au moins une conduite de produit alimentaire (2.1 à 2.4) aboutissant à un lieu de prélèvement (4) en particulier des abreuvoirs, le produit alimentaire et/ou l'agent de nettoyage étant transporté du récipient mélangeur (1) au lieu de prélèvement (4)
**caractérisé en ce que**
de l'air est introduit de manière cadencée pour faire sortir totalement le produit alimentaire et/ou l'agent de nettoyage de la conduite (2.1 à 2.4) et/ou du lieu de prélèvement (4) de la conduite (2.1 à 2.4).

2. Procédé selon la revendication 1,
**caractérisé en ce que**
l'air est introduit dans la conduite de produit alimentaire (2.1 à 2.4) pendant une durée définie alternant avec des pauses déterminables, le cas échéant selon un cycle répétitif.

3. Procédé selon la revendication 1 ou 2,
**caractérisé en ce qu'**
après l'introduction de l'air et après que le produit alimentaire et/ou l'agent de nettoyage soit sorti de la conduite de produit alimentaire (2.1 à 2.4), a lieu une pause d'une durée choisie, puis une faible quantité définie d'un liquide, en particulier de l'eau, est introduite dans la conduite (2.1 à 2.4), éventuellement par l'intermédiaire du récipient mélangeur (1).

4. Procédé selon la revendication 3,
**caractérisé en ce que**
la petite quantité de liquide, d'eau en particulier, destinée à nettoyer le récipient mélangeur (1), la conduite de produit alimentaire (2.1 à 2.4) et éventuellement le lieu de prélèvement, est transportée au lieu de prélèvement (4) par introduction d'air dans la conduite de produit alimentaire (2.1 à 2.4).

5. Procédé selon la revendication 4,
**caractérisé en ce que**
l'introduction cadencée d'air dans la conduite de produit alimentaire (2.1 à 2.4) assure la délivrance au lieu de prélèvement (4) de la faible quantité de liquide.

6. Procédé selon l'une quelconque des revendications 3 à 5,
**caractérisé en ce que**
le liquide en petite quantité, soit environ 30 à 1000 ml pour chaque conduits de produit alimentaire (2.1 à 2.4), est chauffé avant son introduction dans le récipient mélangeur (1) ou dans la conduite (2.1 à 2.4).

7. Procédé selon l'une quelconque des revendications 1 à 6,
**caractérisé en ce que**
pour nettoyer le récipient mélangeur (1) et/ou la conduite de produit alimentaire (2.1 à 2.4) au moyen d'un agent de nettoyage, le lieu de prélèvement (4) est déconnecté et le liquide de nettoyage est évacué à travers une conduits de sortie (14) branchée en aval du récipient mélangeur (1) ou en amont du lieu de prélèvement (4).

8. Procédé selon l'une quelconque des revendications 1 à 7,
**caractérisé en ce que**
pour nettoyer le lieu de prélèvement (4) et ses buses (7) ou ses tétines (13), au moyen du liquide de nettoyage, on ferme ou on recouvre automatiquement le lieu de prélèvement (4) avant d'envoyer le liquide de nettoyage par la conduite de produit alimentaire (2.1 à 2.4).

9. Procédé selon la revendication 8,
**caractérisé en ce que**
le liquide de nettoyage est ensuite envoyé au lieu de prélèvement (4) et évacué par une conduite de sortie (14) à fonctionnement automatique, avec ensuite un post-nettoyage à l'eau.

10. Dispositif pour délivrer à des animaux un produit alimentaire liquide, et/ou un agent de nettoyage, à partir d'un récipient mélangeur (1) auquel fait suite une conduite de produit alimentaire (2,1 à 2.4) reliée à un lieu de prélèvement (4) pour animaux,
**caractérisé en ce que**
de l'air peut être envoyé de manière cadencée, dans la conduite de produit alimentaire (2.1 à 2.4), par l'intermédiaire d'au moins une conduite d'air (8) débouchant dans la conduite de produit alimentaire (2.1 à 2.4), éventuellement sous la commande d'une vanne (5).

11. Dispositif selon la revendication 10,
**caractérisé en ce qu'**
une pompe (3), à laquelle fait suite un clapet anti-retour (18), est montée dans la conduite de produit alimentaire (2), entre le récipient mélangeur (1) et la vanne (5).

12. Dispositif selon la revendication 11,
**caractérisé en ce qu'**
une conduite d'air (8) débouche dans la conduite de produit alimentaire (2.1), entre la vanne (5) et le clapet anti-retour (18).

13. Dispositif selon l'une quelconque des revendications 10 à 12,
**caractérisé en ce qu'**
une conduite de sortie (14) à fonctionnement automatique est associée au récipient mélangeur (1) et/ou à la vanne (5) et/ou au lieu de prélèvement (4).

14. Dispositif selon l'une quelconque des revendications 10 à 13,
**caractérisé en ce que**
le lieu de prélèvement (4), lorsque s'effectue le nettoyage automatique par l'agent de nettoyage, peut être recouvert ou obturé automatiquement.

15. Dispositif selon l'une quelconque des revendications 10 à 14,
**caractérisé en ce que**
le lieu de prélèvement (4), lorsque s'effectue le nettoyage automatique par l'agent de nettoyage, peut être recouvert par un élément de couverture (16) qui éventuellement est lui-même constitué de manière à pouvoir accueillir du produit alimentaire.

16. Dispositif selon l'une quelconque des revendications 11 à 15,
**caractérisé en ce qu'**
à chaque embranchement (6.1, 6.2) est associée une la vanne de commutation (15) commandée.

17. Dispositif pour délivrer à des animaux un produit alimentaire et/ou un agent de nettoyage, à un lieu de prélèvement (4) pour animaux,
**caractérisé en ce qu'**
une ouverture (17) prévue au lieu de prélèvement (4) peut être recouverte ou obturée manuellement et/ou automatiquement, par au moins un élément de couverture (16), tandis que cet élément de couverture (16) est conçu, au moins en partie, de manière à constituer un lieu de prélèvement (4) pour un complément alimentaire pour animaux.
